Europäisches Patentamt

European Patent Office

Office européen des brevets

(11) Veröffentlichungsnummer: **0 206 035**
**B1**

(12) # EUROPÄISCHE PATENTSCHRIFT

(45) Veröffentlichungstag der Patentschrift: **11.04.90**

(21) Anmeldenummer: **86107660.2**

(22) Anmeldetag: **05.06.86**

(51) Int. Cl.⁵: **E 05 F 11/12, A 01 G 9/24**

(54) **Stellantrieb für Fenster, insbesondere Klappfenster.**

(30) Priorität: **28.06.85 DE 3523222**

(43) Veröffentlichungstag der Anmeldung:
**30.12.86 Patentblatt 86/52**

(45) Bekanntmachung des Hinweises auf die
Patenterteilung:
**11.04.90 Patentblatt 90/15**

(84) Benannte Vertragsstaaten:
**AT BE CH DE FR GB IT LI LU NL SE**

(56) Entgegenhaltungen:
**EP-A- 0 121 062**
**CH-A- 324 587**
**CH-A- 476 193**
**DE-A- 3 119 103**
**FR-A- 712 299**
**GB-A- 749 419**

(73) Patentinhaber: **Firma Klemens Schlachter**
**Wasserburger Weg 1/2**
**D-8870 Günzburg (DE)**

(72) Erfinder: **Schlachter, Klemens**
**Wasserburger Weg 1/2**
**D-8870 Günzburg (DE)**

(74) Vertreter: **Fay, Hermann, Dipl.-Phys. Dr. et al**
**Ensingerstrasse 21 Postfach 1767**
**D-7900 Ulm (Donau) (DE)**

Courier Press, Leamington Spa, England.

## Beschreibung

Die Erfindung betrifft einen Stellantrieb für Fenster, insbes. Klappfenster an Wintergärten und Gewächshäusern, mit zumindest zwei etwa in ihrer Mitte scherenartig schwenkbar miteinander verbundenen Stellhebeln, die jeweils an ihrem einen Ende an gegeneinander verstellbaren Halteböcken und an ihrem entgegengesetzten Ende an zwei Betätigungshebeln gelenkig angeschlossen sind, wobei die Betätigungshebel mit ihrem anderen Ende schwenkbar an einem Anschlußglied für das Fenster gelagert sind.

Derartige Stellantriebe dienen dazu, die zumeist zahlreichen Fenster an Wintergärten bzw. Gewächshäusern entsprechend den Innen- und Außentemperaturen zu öffnen bzw. zu schließen, so daß im Inneren eine vorgegebene, im wesentlichen konstante Temperatur eingehalten wird. Dazu werden die Stellantriebe häufig von mit Temperaturfühlern ausgerüsteten Reglern betätigt.

Aus der CH—A—324 587 ist eine Vorrichtung zur Betätigung einer schwenkbaren Platte, insbesondere eines Fensters bekannt, bei welcher über eine Scherenverbindung die Platte bzw. das Fenster von Hand verstellt werden kann und vorgesehen ist, daß die Platte bzw. das Fenster in verschiedenen Schwenk- bzw. Raststellungen gehalten wird. Dazu sind die im übrigen in axialer Richtung gegen eine Federkraft elastisch verstellbar ausgebildeten Halteböcke mit randseitigen Ausnehmungen versehen, in die Rastelemente eingreifen, die eine Feststellung des Fensters unter verschiedenen Fensteröffnungswinkeln ermöglichen. Bei dieser ausschließlich für eine Handbetätigung vorgesehenen Vorrichtung greift die Kraft zur Verstellung des Fensters unmittelbar am Fenster selbst an, während die auf die Halteböcke einwirkende Federkraft lediglich der Schließbewegung entgegenwirkt, bzw. das Fensteröffnen unterstützt.

Die CH—A—476 193 beschreibt eine Vorrichtung zum Öffnen und Verschließen und zur Verriegelung von Oberlichten, die es ermöglicht, nach Beendigung der Schließbewegung des Oberlichts dieses zusätzlich zu verriegeln. Das Oberlicht ist mit dem Rahmen über einen Scherenverschluß verbunden, dessen beide Schenkel einerseits am Oberlicht und andererseits am Rahmen bzw. am Scherenlenker angeschlossen sind. Die im Bereich ihres gemeinsamen Gelenks abgewinkelt verlaufenden Scherenarme sind dabei jeweils in Längsrichtung des Rahmens bzw. des Oberlichtes verschiebbar geführt, wordurch auch bei bereits geschlossenem Oberlicht die Möglichkeit besteht, den Scherenlenker um eine zusätzliche Wegstrecke zu verstellen. Dadurch können am Scherenlenker angeordnete Rollzapfen hinter Schließbleche der Oberlichte greifen und diese in ihrer geschlossenen Stellung verriegeln.

Es ist auch schon bekannt, solche Fenster über Zahnstangenantriebe zu betätigen, wobei jeweils am Fensterflügel eine gerade oder gekrümmt verlaufende Zahnstange angeschlossen ist, die von einem auf einer drehangetriebenen Welle angeordneten Zahnrad oder Ritzel verstellt wird. Derartige Antriebe besitzen jedoch den Nachteil, daß sie wegen des gegenseitigen Zahneingriffs nicht geräuschlos arbeiten, so daß ihr Einsatz insbes. im Wohnbereich nur bedingt möglich ist, zumal wenn stark wechselnder Sonneneinfall ein häufiges Nachstellen erforderlich macht. Weiter ist es von Nachteil, daß die Zahnstange bei geschlossenem Fenster weit nach innen vorsteht, was vor allem bei niedrigen Wintergärten die Begehbarkeit stark behindert und die Gefahr von Kopfverletzungen in sich birgt.

Der Erfindung liegt die Aufgabe zugrunde, einen Stellantrieb zu schaffen, der weitgehend geräuschfrei und leichtgängig betätigbar ist, der eine geringe Bauhöhe und zudem keine ins Rauminnere vorstehenden Teile aufweist und der aus seiner Grundstellung bei geschlossenem Fenster mit geringer Anfangskraft verstellbar ist.

Diese Aufgabe wird bei einem Stellantrieb der eingangs genannten Art dadurch gelöst, daß die Stellhebel in der zu ihrer Schwenkachse senkrechten Ebene im Bereich des die beiden Stellhebel verbindenden Gelenks abgewinkelt sind und auf der den antreibbar ausgebildeten Halteböcken zugewandten Seite einen stumpfen Winkel bilden, wobei das Maß der Abwinklung so gewählt ist, daß bei auf maximalen gegenseitigen Abstand verfahrenen Halteböcken die mit den Betätigungshebeln verbundenen Arme der Stellhebel im wesentlichen parallel zur Verstellrichtung der Halteböcke verlaufen.

Der durch die Erfindung erreichte Fortschritt besteht im wesentlichen darin, daß die in der Grundstellung des Stellantriebs, wenn also die Halteböcke auf ihren maximalen gegenseitigen Abstand verfahren sind, auftretende Anfangskraft bei Betätigung des Stellantriebs infolge der Abwinklung der Stellhebel gering ist, so daß keine die Funktionsweise beeinträchtigenden bleibenden Verformungen an den Stell- und Betätigungshebeln auftreten können. Dadurch kann auch die notwendige Leistung eines den Stellantrieb betätigenden Motors geringer gehalten werden. Im übrigen wird durch die scherenartige Anordnung der Stell- und Betätigungshebel sowie deren Abwinklung auch bei geschlossenem Fenster eine sehr geringe Bauhöhe des Stellantriebs erreicht, so daß dieser in unmittelbarer Nähe der Fensterebene angeordnet sein kann und die Begehbarkeit von Wintergärten und Gewächshäusern geringerer Höhe nicht beeinträchtigt. Insbes. weist dieser Stellantrieb keine Teile auf, die ins Innere des Raumes vorstehen.

In bevorzugter Ausführungsform der Erfindung beträgt der von den Armen des Stellhebels gebildete stumpfe Winkel zweckmäßigerweise etwa 165°. Weiter ist es von Vorteil, wenn die Betätigungshebel im Bereich ihres Befestigungspunktes am Anschlußglied mit einer Abwinklung versehen sind, deren Verlauf der Abwinklung der Stellhebel entspricht.

In besonders vorteilhafter und daher im Rahmen der Erfindung bevorzugter Ausführungsform sind die Halteböcke zu ihrer gegenseitigen Verstellung mit einer Gewindebohrung auf einer Gewindespindel angeordnet, die beidseits ihrer zwischen den Halteböcken liegenden Mitte mit jeweils einem Gewinde mit zueinander gegenläufigem Gewindesinn versehen ist. Somit kann der Stellantrieb durch einfaches Verdrehen der Gewindespindel betätigt werden. Hierbei ist es von besonderem Vorteil, wenn die Gewindespindel in axialer Richtung hohl zur Aufnahme einer Antriebswelle ausgebildet ist. Dadurch besteht auch die Möglichkeit, mehrere Stellantriebe mit zueinander fluchtender Gewindespindel auf einer gemeinsamen Antriebswelle zur gleichzeitigen Verstellung mehrerer Fenster anzuordnen. Der Aufnahmequerschnitt für die Antriebswelle kann dabei unrunde Gestalt aufweisen, um die Drehfestigkeit zwischen der Gewindespindel und der Antriebswelle zu gewährleisten. Werden jedoch mehrere Stellantriebe auf einer gemeinsamen Antriebswelle angeordnet, so muß die Drehlage der Gewindespindel zur Antriebswelle so justiert werden, daß alle Fenster gleichzeitig schließen.

Hierzu empfiehlt sich die Verwendung einer zylindrischen Antriebswelle, wobei dann die Gewindespindel zumindest einen radial verlaufenden Gewindestift zur drehfesten Verbindung mit der zylindrischen Antriebswelle aufweist. Dieser Gewindestift ist zweckmäßigerweise zwischen den gegenläufigen Gewinden angeordnet.

Weiter ist es von Vorteil, wenn die Halteböcke quaderförmige Gestalt aufweisen und mit einem sich in Richtung der Spindelachse erstreckenden, zu dem Anschlußglied hin offenen Führungsspalt für die Stellhebel versehen sind. Auf diese Weise wird eine gute Führung der Stellhebel in zur Verstellebene senkrechter Richtung erreicht. Eine leichte Verstellbarkeit des Stellantriebs wird auch dadurch erzielt, daß die Halteböcke aus Polyamid bestehen. Dadurch bedarf es im übrigen keiner Schmiermittel zwischen den Halteböcken und der Spindel einerseits sowie der Stellhebel andererseits. Schließlich wird die Leichtgängigkeit des Stellantriebs auch dadurch gefördert, daß die Lagergelenke zweckmäßigerweise von Messingbüchsen gebildet sind.

Im folgenden wird die Erfindung an einem in der Zeichnung dargestellten Ausführungsbeispiel näher erläutert; es zeigen:

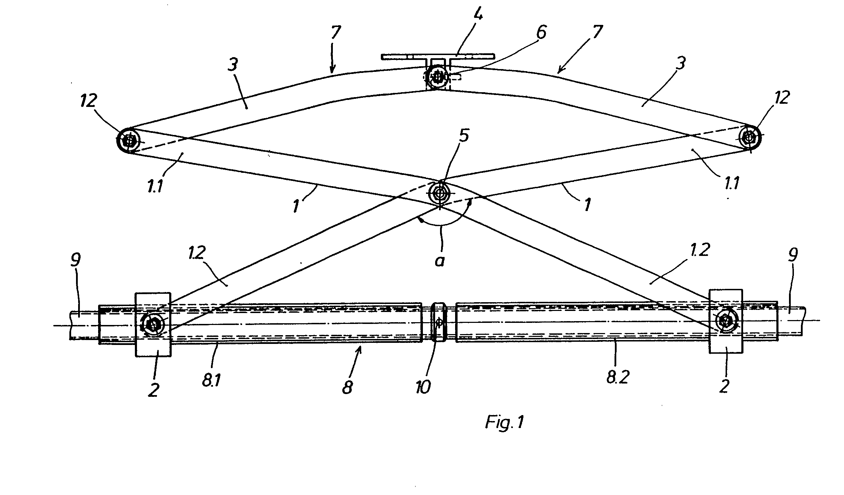

Fig. 1 den Stellantrieb nach der Erfindung in Draufsicht,

Fig. 2 den Gegenstand nach Fig. 1 in Seitenansicht,

Fig. 3 den Gegenstand nach Fig. 1 in entsprechender Darsteluung, jedoch in Grundstellung.

Der in der Zeichnung dargestellte Stellantrieb ist für die Betätigung von Fenstern, insbes. von Klappfenstern an Wintergärten und Gewächshäusern vorgesehen. Der Stellantrieb besteht aus zwei etwa in ihrer Mitte scherenartig schwenkbar miteinander verbundenen Stellhebeln 1, die jeweils mit ihrem einen Arm 1.2 endseitig an gegeneinander verstell- und antreibbaren Halteböcken 2 angeschlossen sind. An ihrem entgegengesetzten Ende sind die Stellhebel 1 gelenkig an zwei Betätigungshebel 3 angeschlossen, die wiederum mit ihrem anderen Ende schwenkbar an einem Anschlußglied 4 gelagert sind. Das Anschlußglied 4 dient der Befestigung des Stellantriebes an dem in der Zeichnung nicht dargestellten Fenster.

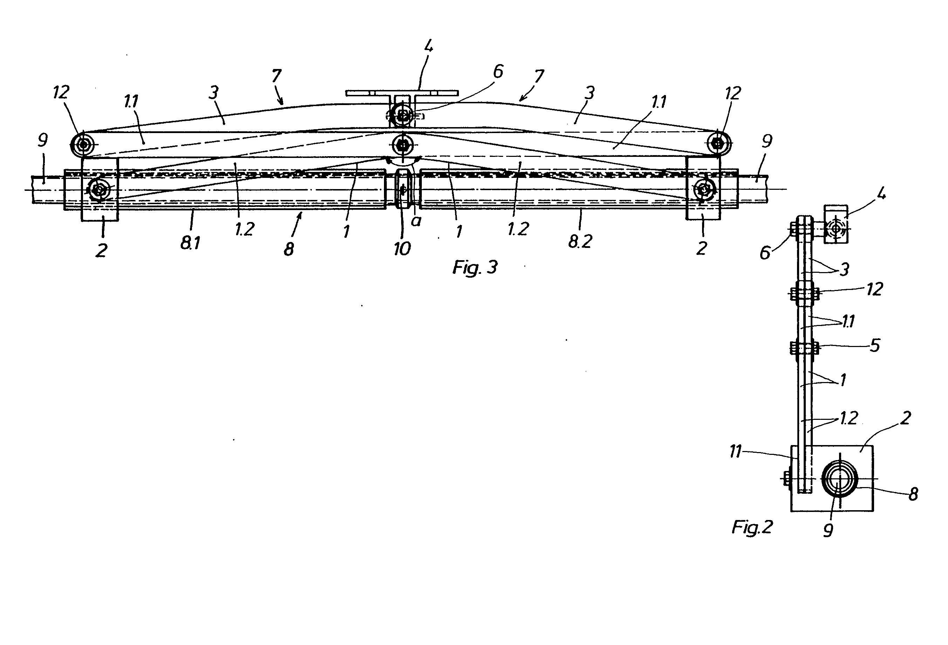

Die Stellhebel 1 sind in der zu ihrer Schwenkachse senkrechten Ebene abgewinkelt und bilden somit auf der den Halteböcken zugewandten Seite einen stumpfen Winkel a. Dabei ist die Abwinklung im Bereich des die beiden Stellhebel 1 verbindenden Gelenks 5 angeordnet. Das Maß der Abwinklung ist im einzelnen so gewählt, daß bei auf maximalen gegenseitigen Abstand verfahrenen Halteböcken 2, wie dies die Fig. 3 zeigt, die mit den Betätigungshebeln 3 verbundenen Arme 1.1 der Stellhebel 1 im wesentlichen parallel zur Verstellrichtung der Halteböcke 2 verlaufen. Dadurch liegen die Gelenke 5 und 12 etwa auf einer Geraden. Wird der Stellantrieb aus dieser Grundstellung heraus verstellt, so ist durch die Verlagerung des Gelenks 5 weg von der Wirkungsgeraden der über die Halteböcke 2 an den Stellhebeln 1 angreifenden Kraft die in Längsrichtung des Hebelarms 1.2 angreifende Kraftkomponente erheblich verringert.

Bei den aus der Zeichnung hervorgehenden Abmessungen des Stellantriebs beträgt der von den Armen des Stellhebels gebildete stumpfe Winkel a etwa 165°. Die Betätigungshebel 3 sind im Bereich ihres Befestigungspunkts 6 am Anschlußglied 4 ebenfalls bei 7 mit einer Abwinklung versehen, deren Verlauf der Abwinklung der Stellhebel entspricht.

Die Halteböcke 2 sind zu ihrer gegenseitigen Verstellung mit einer Gewindebohrung auf einer Gewindespindel 8 angeordnet, die beidseits ihrer zwischen den Halteböcken 2 liegenden Mitte mit jeweils einem Gewinde 8.1, 8.2 mit zueinander gegenläufigem Gewindesinn versehen ist. Um eine besonders gute und reibungsfreie Verstellbarkeit zu erreichen, sind die Gewinde 8.1, 8.2 viergängig ausgeführt. Die Gewindespindel 8 ist in axialer Richtung hohl zur Aufnahme einer Antriebswelle 9 ausgebildet. Auf diese Antriebswelle 9 können in in der Zeichnung nicht näher dargestellter Weise mehrere solcher Spindeln 8 aufgeschoben sein, so daß durch den Antrieb der Antriebswelle 9 mehrere Fenster gleichzeitig betätigt werden können. Zur drehfesten Verbindung mit der Antriebswelle 9 weist die Gewindespindel 8 zumindest einen radial verlaufenden Gewindestift 10 auf, der an seiner an der Antriebswelle 9 zur Anlage kommenden Fläche als Schneidring ausgebildet sein kann. Dadurch ist es möglich, mehrere Stellantriebe bei gelöstem Gewindestift 10 durch Verdrehen der Gewindespindel 8 gegenüber der Antriebswelle 9 so zueinander zu justieren, daß die einzelnen Fenster gemeinsam schließen. Der Gewindestift 10 ist im einzelnen zwischen den beiden gegenläufigen Gewinden 8.1, 8.2 angeordnet.

Die Halteböcke 2 weisen quaderförmige Gestalt auf und sind mit einem sich in Richtung der Spindelachse erstreckenden, zu dem Anschlußglied 4 hin offenen Führungsspalt 11 für die Stellhebel 1 versehen. Um besonders gute Verstelleigenschaften bei geringer Reibungskraft zu erreichen, bestehen die Halteböcke 2 aus Polyamid. Ein besonders wartungsfreier Betrieb wird im übrigen dadurch erreicht, daß die Lagergelenke 4, 5, 12 von Messingbüchsen gebildet sind.

## Patentansprüche

1. Stellantrieb für Fenster, insbes. für Klappfenster an Wintergärten und Gewächshäusern, mit zumindest zwei etwa in ihrer Mitte scherenartig schwenkbar miteinander verbundenen Stellhebeln (1), die jeweils an ihrem einen Ende an gegeneinander verstellbaren Halteböcken (2) und an ihrem entgegengesetzten Ende an zwei Betätigungshebeln (3) gelenkig angeschlossen sind, wobei die Betätigungshebel (3) mit ihrem anderen Ende schwenkbar an einem Anschlußglied (4) für das Fenster gelagert sind, dadurch gekennzeichnet, daß die Stellhebel (1) in der zu ihrer Schwenkachse senkrechten Ebene im Bereich des die beiden Stellhebel (1) verbindenden Gelenks (5) abgewinkelt sind und auf der den antreibbar ausgebildeten Halteböcken (2) zugewandten Seite einen stumpfen Winkel (a) bilden, wobei das Maß der Abwinklung so gewählt ist, daß bei auf maximalen gegenseitigen Abstand verfahrenen Halteböcken (2) die mit den Betätigungshebeln (3) verbundenen Arme (1.1) der Stellhebel (1) im wesentlichen parallel zur Verstellrichtung der Halteböcke (2) verlaufen.

2. Stellantrieb nach Anspruch 1, dadurch gekennzeichnet, daß der von den Armen (1.1, 1.2) des Stellhebels (1) gebildete stumpfe Winkel (a) etwa 165° beträgt.

3. Stellantrieb nach Anspruch 1 oder 2, dadurch gekennzeichnet, daß die Betätigungshebel (3) im Bereich ihres Befestigungspunkts (6) am Anschlußglied (4) mit einer Abwinklung versehen sind, deren Verlauf der Abwinklung der Stellhebel (1) entspricht.

4. Stellantrieb nach den Ansprüchen 1 bis 3, dadurch gekennzeichnet, daß die Halteböcke (2) zu ihrer gegenseitigen Verstellung mit einer Gewindebohrung auf einer Gewindespindel (8) angeordnet sind, die beidseits ihrer zwischen den Halteböcken (2) liegenden Mitte mit jeweils einem Gewinde (8.1, 8.2) mit zueinander gegenläufigem Gewindesinn versehen ist.

5. Stellantrieb nach Anspruch 4, dadurch gekennzeichnet, daß die Gewindespindel (8) in axialer Richtung hohl zur Aufnahme einer Antriebswelle (9) ausgebildet ist.

6. Stellantrieb nach Anspruch 5, dadurch gekennzeichnet, daß die Gewindespindel (8) zumindest einen radial verlaufenden Gewindestift (10) zur drehfesten Verbindung mit einer zylindrischen Antriebswelle (9) aufweist.

7. Stellantrieb nach Anspruch 6, dadurch gekennzeichnet, daß der Gewindestift (10) zwischen den gegenläufigen Gewinden (8.1, 8.2) angeordnet ist.

8. Stellantrieb nach den Ansprüchen 1 bis 7, dadurch gekennzeichnet, daß die Halteböcke (2) quaderförmige Gestalt aufweisen und mit einem sich in Richtung der Spindelachse erstreckenden, zu dem Anschlußglied (4) hin offenen Führungsspalt (11) für die Stellhebel (1) versehen sind.

9. Stellantrieb nach den Ansprüchen 1 bis 8, dadurch gekennzeichnet, daß die Halteböcke (2) aus Polyamid bestehen.

10. Stellantrieb nach den Ansprüchen 1 bis 9, dadurch gekennzeichnet, daß die Lagergelenke (5, 6, 12) von Messingbüchsen gebildet sind.

## Revendications

1. Dispositif d'actionnement pour fenêtres, notamment pour fenêtres basculantes de jardins d'hiver et de serres, comprenant au moins deux leviers de commande (1) articulés à peu près au milieu l'un sur l'autre à la manière de ciseaux et qui sont respectivement articulés à l'une de leurs extrémités sur des blocs de fixation (2) réglables l'un par rapport à l'autre et, à leurs extrémités opposées sur deux leviers de manoeuvre (3), lesdits leviers de manoeuvre (3) étant articulés avec leurs autres extrémités sur un organe de raccordement (4), caractérisé en ce que les leviers de commande (1) sont coudés dans le plan perpendiculaire à leur axe de pivotement, dans la région de l'articulation (5) reliant les deux leviers de commande (1) et qu'ils forment un angle obtus (a) du côté dirigé vers les blocs de fixation (2) commandables, l'angle du coude étant choisi de telle façon que, lorsque les blocs de fixation (2) sont écartés au maximum, les bras (1.1) des leviers de commande (1) rattachés aux leviers de manoeuvre (3) s'étendent sensiblement parallèlement à la direction de déplacement des blocs de fixation (2).

2. Dispositif d'actionnement selon la revendication 1, caractérisé en ce que l'angle obtus (a) formé par les bras (1.1, 1.2) du levier de commande (1) est d'environ 165°.

3. Dispositif d'actionnement selon l'une des revendications 1 ou 2, caractérisé en ce que les leviers de manoeuvre (3) présentent dans la région de leur point de fixation (6) sur l'organe de raccordement (4) un coude dont l'angle correspond à celui du coude des leviers de commande (1).

4. Dispositif d'actionnement selon l'une des revendications 1 à 3, caractérisé en ce que les blocs de fixation (2) munis d'un taraudage sont montés, pour leur déplacement relatif, sur une broche filetée (8) laquelle porte respectivement, de part et d'autre de son milieu entre les blocs de fixation (2), un filet (8.1, 8.2) à pas de vis en sens opposé.

5. Dispositif d'actionnement selon la revendication 4, caractérisé en ce que la broche filetée (8) est creuse dans le sens axial pour recevoir un arbre moteur (9).

6. Dispositif d'actionnement selon la revendication 5, caractérisé en ce que la broche filetée (8) comprend au moins une vis sans tête (10) d'extension radiale pour assurer la liaison rigide en rotation avec un arbre moteur cylindrique (9).

7. Dispositif d'actionnement selon la revendication 6, caractérisé en ce que la vis sans tête (10) est disposée entre les filets (8.1, 8.2) à pas opposés.

8. Dispositif d'actionnement selon l'une des revendications 1 à 7, caractérisé en ce que les blocs de fixation (2) présentent une forme parallélépipédique et comprennent une fente de guidage (11) pour les leviers de commande (1) s'étendant en direction de l'axe de la broche et ouverte en direction de l'organe de raccordement (4).

9. Dispositif d'actionnement selon l'une des revendications 1 à 8, caractérisé en ce que les blocs de fixation (2) sont réalisés en polyamide.

10. Dispositif d'actionnement selon l'une des revendications 1 à 9, caractérisé en ce que les articulations (5, 6, 12) sont constituées de douilles de laiton.

**Claims**

1. An actuating drive for windows, in particular for skylight windows on conservatories and greenhouses, with at least two adjusting levers (1) pivotably connected together approximately in their centre, in the manner of scissors, each adjusting lever being pivotably connected at their one end to holding brackets (2), which are adjustable relative to one another, and at their other end to two actuating levers (3), the actuating levers (3) being pivotably mounted at their other end on a connecting member (4) for the window, characterised in that the adjusting levers (1) are bent back in the region of the hinge (5) connecting the two adjusting levers (1) in the plane perpendicular to their pivotal axis and form an obtuse angle (a) on the side facing the drivably formed holding brackets (2), the angle of bending back being so chosen that, when the holding brackets (2) are moved to their maximum mutual distance, the arms (1.1) of the adjusting levers (1) connected to the actuating levers (3) extend substantially parallel to the adjustment direction of the holding brackets (2).

2. An actuating drive according to claim 1, characterised in that the obtuse angle (a) formed by the arms (1.1, 1.2) of the adjusting lever (1) is approximately 165°.

3. An actuating drive according to claim 1 or 2, characterised in that the actuating levers (3) are bent back in the region of their fixing point (6) to the connecting member (4), the degree of bending back corresponding to that of the adjusting levers (1).

4. An actuating drive according to claims 1 to 3, characterised in that the holding brackets (2) are mounted for mutual adjustment with a threaded bore on a threaded spindle (8), which is provided on each side of its centre lying between the holding brackets (2) with respective threads (8.1, 8.2) with opposite thread directions.

5. An actuating drive according to claim 4, characterised in that the threaded spindle (8) is hollow in the axial direction for receiving a drive shaft (9).

6. An actuating drive according to claim 5, characterised in that the threaded spindle (8) has at least one radially extending threaded pin (10) for making a non-rotatable connection with a cylindrical drive shaft (9).

7. An actuating device according to claim 6, characterised in that the threaded pin (10) is disposed between the opposite threads (8.1, 8.2).

8. An actuating drive according to claims 1 to 7, characterised in that the holding brackets (2) have a rectangular shape and are provided with a guide slot (11) for the adjusting levers (1), which guide slot is open with respect to the connecting member (4) and which extends in the direction of the spindle axis.

9. An actuating drive according to claims 1 to 8, characterised in that the holding brackets (2) consist of polyamide.

10. An actuating drive according to claims 1 to 9 characterised in that the mounting hinges (5, 6, 12) are formed of brass bushings.

Fig. 1

EP 0 206 035 B1

Fig.2

Fig. 3

2